# EUROPÄISCHE PATENTSCHRIFT

(11) **EP 2 355 932 B1**
(45) Veröffentlichungstag und Bekanntmachung des Hinweises auf die Patenterteilung: **12.02.2014**
(21) Anmeldenummer: 09749030.4
(22) Anmeldetag: 11.11.2009
(51) Int. Cl.: B01L 9/06, G01N 35/04, G01N 35/02

(54) **RACKVORRICHTUNG FÜR EIN PROBENVERTEILSYSTEM**
Rack for a sample distribution unit
Support pour une unité d'échantillonnage

(30) Priorität: 14.11.2008 DE 102008058755
(43) Veröffentlichungstag der Anmeldung: 17.08.2011
(73) Patentinhaber: Roche PVT GmbH, 71332 Waiblingen (DE)
(72) Erfinder: ZIEGLER, Michael, 71409 Schwaikheim (DE)
(74) Vertreter: Patentanwälte Ruff, Wilhelm, Beier, Dauster & Partner
(86) Internationale Anmeldenummer: PCT/EP2009/008028
(87) Internationale Veröffentlichungsnummer: WO 2010/054799

(56) Entgegenhaltungen:
- EP-A1- 1 655 609
- EP-A2- 1 705 149
- JP-A- 2007 303 960
- US-A- 5 632 388

## Beschreibung

Die Erfindung betrifft eine Rackvorrichtung für ein Probenverteilsystem. Die Erfindung betrifft weiter ein Rack und einen Rackschlitten für eine Rackvorrichtung.

Ein Probenverteilsystem ist beispielsweise aus US 7,141,213 B1 bekannt. Ein Probenverteilsystem dient dazu, Proben für eine Analyse oder dergleichen vorzubereiten. Die Proben werden dabei beispielsweise aufgeteilt, zentrifugiert, mit Testflüssigkeiten vermischt und ähnliches. Dabei werden in einem Eingangs- oder Ladebereich dem System Probenträger, insbesondere Probenröhrchen, in sogenannten Racks oder Probehaltern zugeführt. Ein Zuführen erfolgt beispielsweise über schubladenartig verstellbare Wannen- oder Schubladenelemente. In dem Probenverteilsystem können die Racks dann in bestimmte Positionen verschoben und/oder an bestimmte Stationen verteilt werden. Dabei ist es bekannt, das Rack auf einem sogenannten Schlitten anzubringen, durch welchen das Rack in dem System verfahrbar ist. Üblicherweise werden mehrere Racks nebeneinander und in Reihe an einer Wanne oder Schublade angeordnet, wobei die Racks sehr eng aneinander angrenzend angeordnet sind.

Aus der US 7,141,213 B1 ist es bekannt, an einer Unterseite eines Racks Aufnahmeöffnungen vorzusehen, durch welche das Rack auf Positionierstifte eines Schlittens beweglich aufsetzbar ist.

Die EP 1 705 149 A2 zeigt eine Vorrichtung zum automatischen Öffnen und Schließen von Reaktionsgefäßen, umfassend eine Halteeinrichtung zum verdrehsicheren Halten von zumindest einem Reaktionsgefäß.

Die EP 1 655 609 A1 zeigt ein Rack zum Halten von Containern.

Die JP 2007-303960 A zeigt ein Rack zur Aufnahme von Reagenzgläsern.

Es ist Aufgabe der vorliegenden Erfindung, eine Rackvorrichtung zu schaffen, wobei ein Rack mit einem Rackschlitten fest verbindbar ist und die Verbindung werkzeuglos auch bei beengten Platzverhältnissen lösbar ist.

Diese Aufgabe wird gelöst durch eine Rackvorrichtung für ein Probenverteilsystem umfassend ein Rack mit Aufnahmen für Probenträger und einen Rackschlitten, wobei der Rackschlitten und das Rack mittels einer werkzeuglos lösbaren Rasteinrichtung fest miteinander verbindbar sind.

Unter einer festen Verbindung wird im Zusammenhang mit der Erfindung eine Verbindung ohne Freiheitsgrade verstanden, wobei in einzelne Richtungen ein geringes Spiel - beispielsweise aufgrund von Fertigungstoleranzen - vorhanden sein kann. Vorzugsweise ist jedoch eine spielfreie Verbindung gegeben. Die Rasteinrichtung erlaubt somit ein Fixieren des Racks an dem Rastschlitten ohne Freiheitsgrade, so dass die Rackvorrichtung innerhalb des Probenverteilsystems auf beliebige Weise mit hoher Genauigkeit manipulierbar ist. Ein werkzeugloses Lösen oder Verbinden der beiden Bauteile ist durch eine Relativbewegung möglich.

Die Rasteinrichtung weist an dem Rackschlitten und dem Rack angeordnete, zueinander komplementäre Rastelemente und mindestens ein Kraftelement zum Aufbringen einer Zwangskraft auf, wobei eine Rastverbindung durch eine Relativbewegung zwischen dem Rackschlitten und dem Rack entgegen der Zwangskraft herstellbar oder lösbar ist. Je nach Gestaltung der Rastelemente können dabei bereits geringe Bewegungen zum Lösen der Verbindung ausreichend sein. Die Relativbewegung ist in einer Ausgestaltung eine translatorische Bewegung. In anderen Ausgestaltungen sind Rotationsbewegungen oder Kombinationsbewegungen zum Lösen der Verbindung vorgesehen. Die erforderliche Kraft zum Lösen liegt vorzugsweise bei 15 bis 20 N.

Die Rastelemente umfassen Rastbolzen und Rastnuten, in welche die Rastbolzen einführbar sind. Die Rastbolzen sind dabei in einer Ausgestaltung so angeordnet und dimensioniert, dass die Rastbolzen nicht oder nur unwesentlich von der Rackvorrichtung im gekoppelten Zustand abragen.

Die Rastelemente umfassen mindestens ein Rastbolzenpaar, umfassend einen starren Rastbolzen und einen davon beabstandeten, beweglichen Rastbolzen, wobei ein Abstand der Rastbolzen entgegen der Zwangskraft des mindestens einen Kraftelements veränderbar ist. Die Rastbolzen können so durch das Kraftelement in Rastnuten gezwängt und in den Rastnuten gehalten werden. In einer vorteilhaften Ausgestaltung umfassen die Rastelemente mindestens ein zu dem Rastbolzenpaar komplementäres Rastnutenpaar mit mindestens zwei gegenüberliegenden Wirkflächen, wobei das mindestens eine Kraftelement bei einer Rastverbindung das Rastbolzenpaar an die Wirkflächen zwingt. Die Wirkflächen können dabei einander zugewandt oder voneinander abgewandt angeordnet sein. Zum Verbinden wird das Rack auf dem beweglichen Rastbolzen aufgebracht und der Rastbolzen wird verschoben bis die dem starren Rastbolzen zugeordnete Rastnut in diesen Rastbolzen einführbar ist. Die hierfür notwendige Relativbewegung ist eine Kombinationsbewegung.

In einer Weiterbildung ist an gegenüberliegenden Seitenflächen des Rackschlittens jeweils ein Rastbolzenpaar vorgesehen, wobei die Rastbolzen in Längsrichtung beabstandet angeordnet sind. Als Längsrichtung wird im Zusammenhang mit der Erfindung eine Einschubrichtung der Rackvorrichtung in ein Probenverteilsystem bezeichnet. Das Rack und der Rackschlitten weisen je nach Größe im Wesentlichen rechteck-förmige Grundflächen auf. Als Seitenflächen werden dabei die parallel zur Längsrichtung verlaufenden seitlichen Flächen bezeichnet. Vorzugsweise ist an Seitenflächen des Racks jeweils ein Rastnutenpaar vorgesehen, in welche ein Rastbolzenpaar für eine Rastverbindung eingreift. Bei einer derartigen Anordnung ist eine ergonomisch besonders günstige Handhabung möglich.

In einer weiteren Ausgestaltung der Erfindung ist vorgesehen, dass in die Aufnahmen Einsätze mit elastischen Federarmen zum Halten der Probenträger eingesetzt sind. Die elastischen Federarme erlauben eine gute Positionierung von Probenträgern, insbesondere von Probenröhrchen. Je nach Anwendung sind Racks mit Einsätzen oder ohne Einsätze, sowie Mischformen vorteilhaft. Die Aufnahmen weisen vorzugsweise einen kreisförmigen Querschnitt auf. Ein Durchmesser beträgt beispielsweise ca. 13,3 mm oder ca. 16,5 mm.

In noch einer weiteren Ausgestaltung der Erfindung ist vorgesehen, dass das Rack aus einem bruchsicheren Kunststoff, insbesondere aus Polycarbonat, beispielsweise Lexan (CAS#25971-63-5) ausgebildet ist.

In noch einer weiteren Ausgestaltung der Erfindung ist vorgesehen, dass das Rack aus einem autoklavierbaren Kunststoff, insbesondere aus Polycarbonat, beispielsweise Lexan (CAS#25971-63-5) ausgebildet ist.

In einer Weiterbildung der Erfindung ist vorgesehen, dass das Rack aus einem Oberteil und einem fest damit verbundenen, insbesondere verschweißten oder verklebten Unterteil zusammengesetzt ist. Dadurch ist eine einfache Fertigung beispielsweise durch Spritzguss möglich.

Vorzugsweise ist vorgesehen, dass das Unterteil und das Oberteil zueinander fluchtend angeordnete Aufnahmen für Probenträger aufweisen, wobei die Aufnahmen des Unterteils konisch verjüngend ausgebildet sind. Durch die konische Verjüngung können Probenröhrchen mit unterschiedlichem Durchmesser aufgenommen werden. Die Verjüngung kann dabei kontinuierlich oder stufenweise erfolgen. Die Aufnahmen haben vorzugsweise einen kreisförmigen Querschnitt.

In einer weiteren Ausgestaltung der Erfindung ist vorgesehen, dass der Rackschlitten zumindest teilweise aus einem magnetischen und/oder magnetisierbaren Material ausgebildet ist. Der Rackschlitten kann so auf einfache Weise mit unterschiedlichen Stationen des Probenverteilsystems gekoppelt werden. Der Rackschlitten ist beispielsweise als gebogenes Stanzteil kostengünstig fertigbar. In anderen Ausgestaltungen ist der Rackschlitten aus einem Kunststoff.

In wieder einer weiteren Ausgestaltung der Erfindung ist vorgesehen, dass der Rackschlitten an seiner Unterseite Kopplungselemente, insbesondere Positionierstifte, zur Kopplung mit dem Probenverteilsystem aufweist. Die Kopplungselemente können beliebig gestaltet sein. Die Kopplungselemente umfassen in einer Ausgestaltung eine Kodierung zur Erkennung eines Racktyps.

Weitere Vorteile der Erfindung ergeben sich aus den Unteransprüchen und aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: Eine schematische Seitenansicht einer erfindungsgemäßen Rackvorrichtung beim Einsetzen eines Racks auf einen Rackschlitten;
- Fig. 2:: die Rackvorrichtung gemäß Fig. 1 in einer perspektivischen Darstellung;
- Fig. 3:: die Rackvorrichtung gemäß Fig. 1 in einer geschnittenen Seitenansicht;
- Fig. 4:: die Rackvorrichtung gemäß Fig. 3 in einer geschnitten Frontansicht;
- Fig. 5:: ein erfindungsgemäßes Rack für eine Rackvorrichtung ähnlich Fig. 1 in einer Explosionsdarstellung;
- Fig. 6:: eine weitere Ausgestaltung eines Racks für eine erfindungsgemäße Rackvorrichtung;
- Fig. 7:: einen Rackschlitten für eine erfindungsgemäße Rackvorrichtung in einer perspektivischen Darstellung und
- Fig. 8:: eine Draufsicht auf einen Rackschlitten gemäß Fig. 7 mit daran angeordneten Blattfedern.

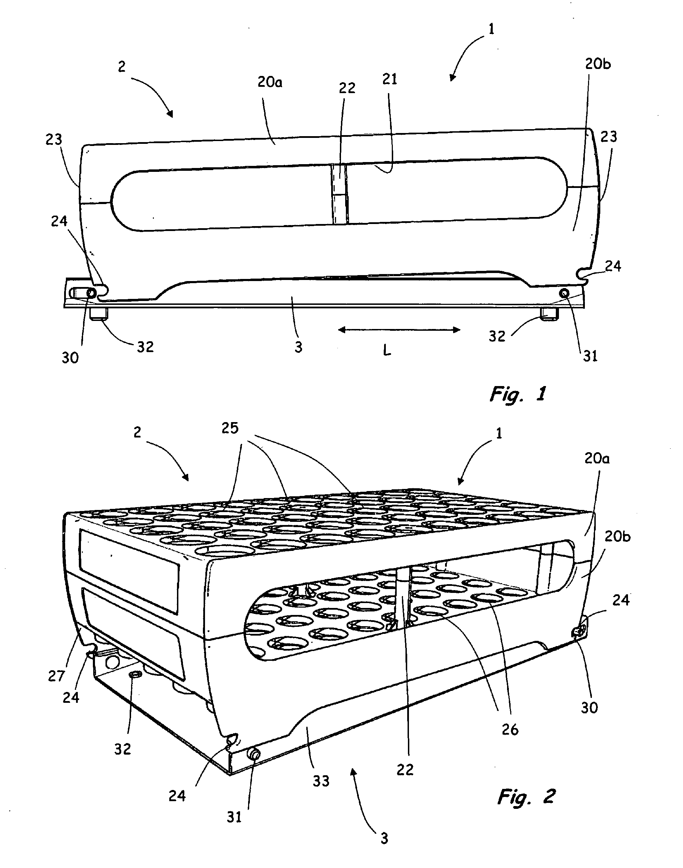

Figur 1 zeigt schematisch eine erfindungsgemäße Rackvorrichtung 1, umfassend ein Rack 2 und einen Rackschlitten 3, welche erfindungsgemäß mittels einer werkzeuglos lösbaren Rasteinrichtung fest miteinander verbindbar sind.

Das Rack 2 ist in dem dargestellten Ausführungsbeispiel zweiteilig aus Kunststoff hergestellt mit einem Oberteil 20a und einem Unterteil 20b, welche miteinander fest verbunden, beispielsweise verklebt und/oder verschweißt sind. Das Oberteil 20a und das Unterteil 20b sind derart miteinander verbunden, dass eine Griffmulde 21 für eine einfache Handhabung des Recks 2 verbleibt. Zur Erhöhung einer Stabilität des Racks 2 sind Stege 22 zwischen dem Oberteil 20a und dem Unterteil 20b vorgesehen. Zur Verbindung mit dem Rackschlitten 3 sind an Stirnflächen 23 des Recks 2 Rastnuten 24 vorgesehen, welche in dem dargestellten Ausführungsbeispiel jeweils in Richtung der Stirnflächen 23 offen sind. Zum Verbinden mit dem Rackschlitten 3 werden die Rastnuten 24 auf Rastbolzen 30, 31 des Rackschlittens aufgesetzt. Die Rastbolzen 30, 31 ragen in dem dargestellten Ausführungsbeispiel von einer Außenseite des Rackschlittens 3 ab. Das zugehörige Rack 2 ist auf den Rackschlitten 3 derart aufsetzbar, dass Innenseiten des Unterteils 20b den Außenseiten des Rackschlittens 3 gegenüberliegen. Die Rastnuten 24 bzw. die Rastbolzen 30, 31 sind in Längsrichtung L der Rackvorrichtung 1 paarweise beabstandet. Als Längsrichtung L wird dabei eine Richtung bezeichnet, in welche die Rackvorrichtung 1 in ein nicht dargestelltes Probenverteilsystem eingesetzt wird. Durch die Anordnung der Rastbolzen 30, 31 an diesen Seitenflächen ist eine besonders einfache Handhabung realisiert. Es sind jedoch auch Ausgestaltungen denkbar, an welchen Rastbolzen 30, 31 und zugehörige Rastnuten 24 an Stirnflächen der Rackvorrichtung 1 vorgesehen sind.

Um ein Einsetzen der Rastnuten 24 auf die Rastbolzen 30, 31 zu ermöglichen, ist der Rastbolzen 30 beweglich gelagert. In anderen Ausgestaltungen sind die Rastbolzen 30 selbst elastisch verformbar, so dass das Kraftelement einteilig mit den Rastbolzen ausgebildet ist.

Zum Verbinden des Racks 2 mit dem Rastschlitten 3 wird zunächst, wie in Figur 1 schematisch dargestellt, das Rack 2 mit seiner Rastnut 24 auf den bewegbaren Rastbolzen 30 geführt. Der bewegbare Rastbolzen 30 kann dann in Längsrichtung L mit dem darauf eingesetzten Rack 2 verschoben werden, bis ein Einsetzen der Rastnut 24 auf den starr angeordneten Rastbolzen 31 möglich ist. Um die Rastverbindung zu sichern, wird der Rastbolzen 30 in der in Figur 1 dargestellten Rastposition mittels eines Kraftelements, insbesondere mittels einer Feder, gehalten. Ein Herstellen oder Lösen der Rastverbindung ist somit nur durch Überwinden der durch die Feder aufgebrachten Zwangskraft möglich.

Der Rackschlitten 3 weist Kopplungselemente 32 auf, welche in dem dargestellten Ausführungsbeispiel als Positionierstifte ausgebildet sind. Mit diesen Kopplungselementen 32 ist der Rackschlitten 3 mit entsprechenden Elementen des nicht dargestellten Probenverteilsystems verbindbar. Der Rackschlitten 3 ist vorzugsweise aus einem magnetischen und/oder einen magnetisierbaren Material, so dass ein Koppeln des Rackschlittens 3 mit dem Probenverteilsystem auch mittels Magnetkraft möglich ist.

Figur 2 zeigt schematisch die Rackvorrichtung 1 gemäß Figur 1 in einer perspektivischen Darstellung. Wie in Figur 2 erkennbar ist, weisen das Oberteil 20a und das Unterteil 20b jeweils Aufnahmen 25, 26 auf, in welche in Figur 2 nicht dargestellte Probenträger, insbesondere Probenröhrchen, einsetzbar sind. Wie in Figur 2 ebenfalls erkennbar ist, ist der Rackschlitten 3 als im Wesentlichen U-förmig geformtes Teil mit einer rechteckförmigen Grundfläche ausgebildet. Das Rack 2 ist derart auf den Rackschlitten 3 aufsetzbar, dass die Innenflächen 27 des Unterteils 20b an Außenseiten 33 der Flanken des Rackschlittens 3 zu liegen kommen.

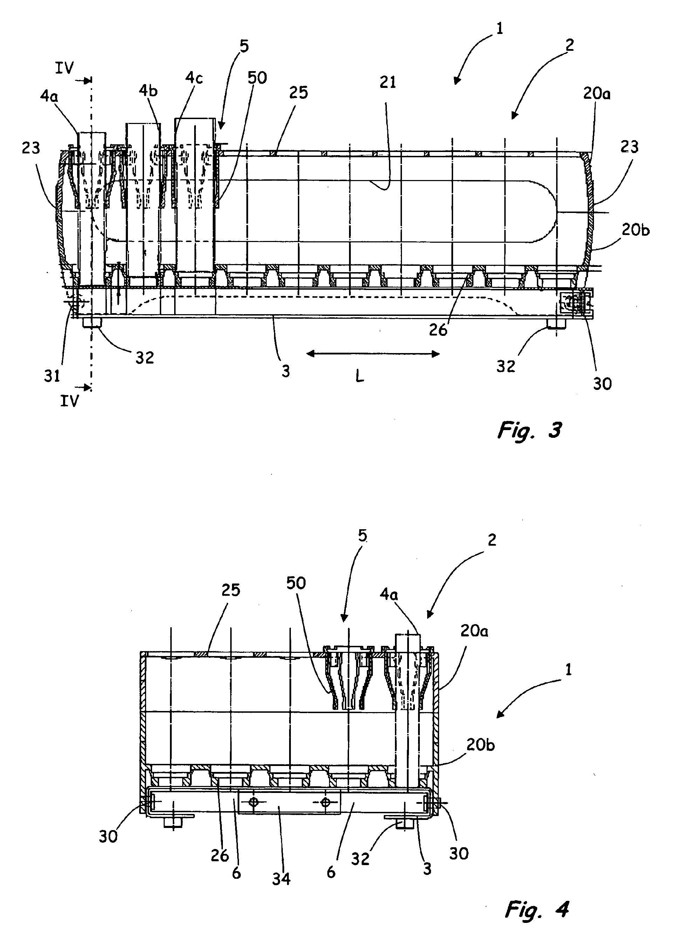

Figur 3 zeigt schematisch eine geschnittene Seitenansicht einer Rackvorrichtung gemäß Figur 1 mit drei darin aufgenommenen Probenträgern 4a, 4b und 4c. In die Aufnahmen 25 des Oberteils 20a sind in dem dargestellten Ausführungsbeispiel Einsätze 5 mit Federarmen 50 eingesetzt, durch welche die Probenträger 4a, 4b, 4c sicher in den Aufnahmen 25 gehalten werden. Wie in Figur 3 ebenfalls erkennbar ist, sind die Aufnahmen 26 in dem Unterteil 20b konisch gestaltet, wobei der Durchmesser der Aufnahmen 26 nach unten hin stufenweise verjüngend ausgebildet ist. Dadurch wird eine Aufnahme von Probenträgern 4a, 4b, 4c mit unterschiedlichen Durchmessern, wie in Figur 3 schematisch dargestellt, verbessert.

Figur 4 zeigt schematisch eine geschnittene Ansicht der Rackvorrichtung 1 entlang einer Schnittlinie IV-IV gemäß Figur 3. Wie in Figur 4 erkennbar ist, weist der Rackschlitten 3 eine Befestigungseinrichtung 34 auf. An der Befestigungseinrichtung 34 sind als Blattfedern 6 ausgebildete Kraftelemente befestigt, durch welche die beweglichen Rastbolzen 30 in die Rastposition gezwungen werden.

Bei der Ausführungsform einer Rackvorrichtung 1 gemäß den Figuren 1 bis 4 sind fünfzig Aufnahmen 25 bzw. 26 vorgesehen, welche geordnet in Reihen und Spalten angeordnet sind, wobei fünf Spalten vorgesehen sind, in welchen jeweils zehn Aufnahmen 25, 26 ausgebildet sind. Es sind jedoch auch Ausgestaltungen mit einer davon abweichenden Spalten- und/oder Reihenzahlen denkbar. Üblicherweise sind Ausführungsformen bevorzugt, welche fünf Spalten aufweisen, wobei vier, fünf, zehn, fünfzehn oder sogar dreißig Reihen vorgesehen sein können. Selbstverständlich sind jedoch auch beliebige andere Ausgestaltungen denkbar.

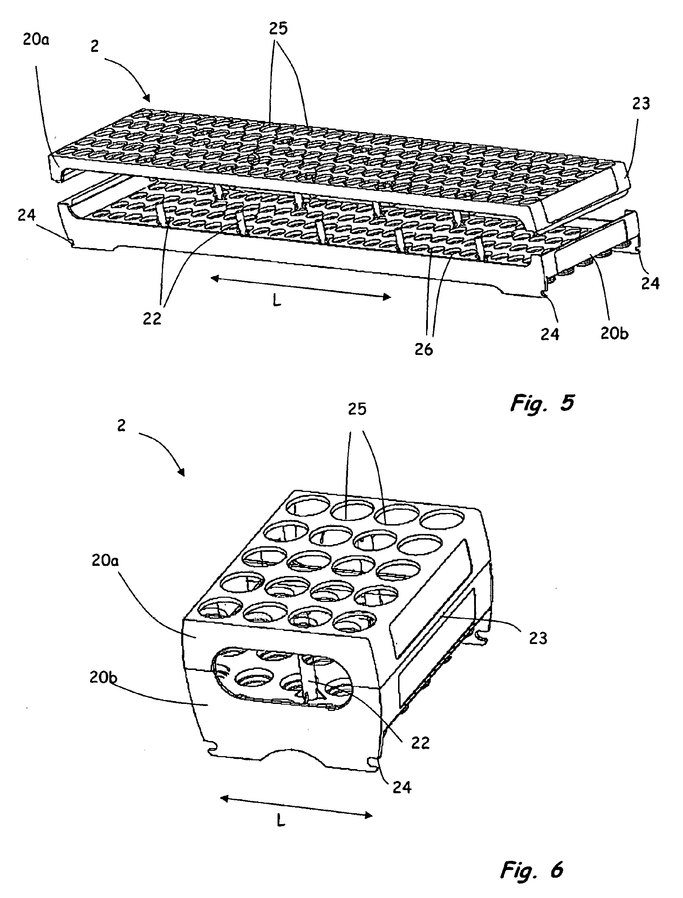

Figur 5 zeigt schematisch ein Rack 2 gemäß einem zweiten Ausführungsbeispiel der Erfindung, wobei Aufnahmen 25, 26 in dreißig Reihen mit jeweils fünf Aufnahmen 25, 26 vorgesehen sind. Die Rackvorrichtung 1 gemäß Figur 5 entspricht im Wesentlichen der Rackvorrichtung 1 gemäß den Figuren 1 bis 4. Für gleiche Bauteile werden einheitliche Bezugszeichen verwendet und auf eine detaillierte Beschreibung dieser Bauteile wird verzichtet. Aufgrund der erhöhten Länge in Längsrichtung L ist zur Verbesserung der Stabilität die Anzahl an Verbindungsstegen 22 zwischen dem Oberteil 20a und dem Unterteil 20b erhöht.

Figur 6 zeigt schematisch in einer perspektivischen Darstellung eine weitere Ausführungsform eines Racks 2, wobei lediglich vier Reihen an Aufnahmen 25, 26 vorgesehen sind.

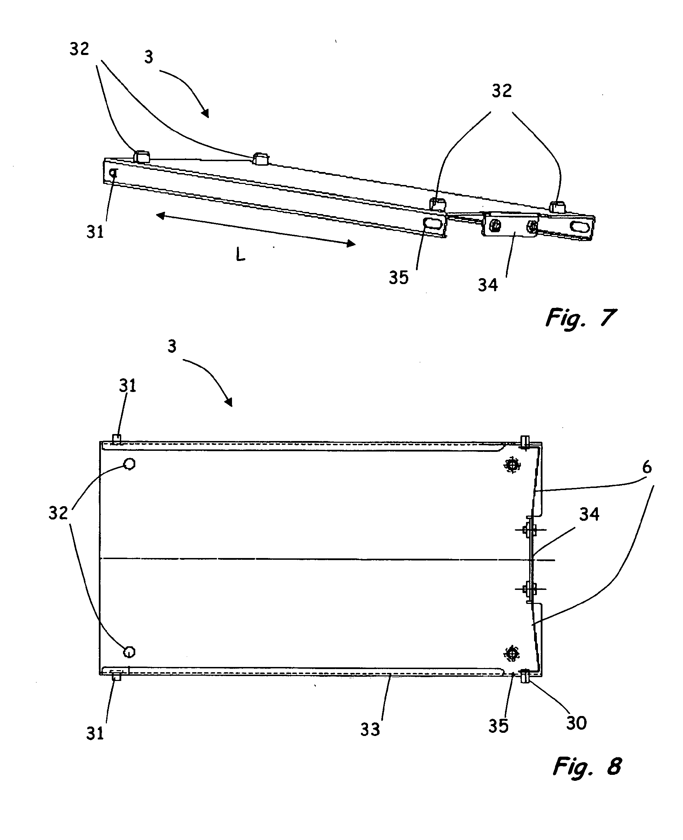

Figur 7 und 8 zeigen schematisch einen Rackschlitten 3 für eine erfindungsgemäße Rackvorrichtung, wobei in Figur 7 für eine bessere Darstellung die Blattfedern 6 nicht dargestellt sind. Wie bereits beschrieben, weist der Rackschlitten 3 eine Befestigungseinrichtung 34 auf, an welche Blattfedern 6 derart angebracht werden, dass mit den Blattfedern 6 verbundene Rastbolzen 30 in einen an den Seitenflanken 33 des Rackschlittens 3 vorgesehenen Langloch 35 geführt werden.

Durch die erfindungsgemäße Rasteinrichtung ist es möglich, ein Rack 2 auf einfache Weise und werkzeuglos mit einem zugehörigen Rackschlitten 3 zu verbinden. Dabei können mehrere Rackschlitten 3 und/oder Rackvorrichtungen 1 auf geringem Bauraum, beispielsweise in einem Schubfach oder einem Eingangsbereich eines Probenverteilsystems eng aneinanderliegend, nebeneinander und in Reihe angeordnet sein, ohne dass eine Handhabung der Rackvorrichtung 1 zum Herstellen oder Lösen der Rastverbindung behindert ist.

## Patentansprüche

1. Rackvorrichtung für ein Probenverteilsystem, umfassend ein Rack (2) mit Aufnahmen für Probenträger (4a, 4b, 4c) und einen Rackschlitten (3), wobei
- der Rackschlitten (3) und das Rack (2) mittels einer werkzeuglos lösbaren Rasteinrichtung fest miteinander verbindbar sind,
- wobei die Rasteinrichtung an dem Rackschlitten (3) und dem Rack (2) angeordnete, zueinander komplementäre Rastelemente (30, 31, 24) und mindestens ein Kraftelement (6) zum Aufbringen einer Zwangskraft aufweist, wobei eine Rastverbindung durch eine Relativbewegung zwischen dem Rackschlitten (3) und dem Rack (2) entgegen der Zwangskraft herstellbar oder lösbar ist,
- wobei die Rastelemente mindestens ein Rastbolzenpaar (30, 31), umfassend einen starren Rastbolzen (31) und einen davon beabstandeten, beweglichen Rastbolzen (30), und Rastnuten (24), in welche die Rastbolzen (30, 31) einführbar sind, umfassen, wobei ein Abstand der Rastbolzen (30, 31) entgegen der Zwangskraft des mindestens einen Kraftelements (6) veränderbar ist.

2. Rackvorrichtung nach Anspruch 1, **dadurch gekennzeichnet, dass** die Rastelemente mindestens ein zu dem Rastbolzenpaar (30, 31) komplementäres Rastnutenpaar (24) mit mindestens zwei gegenüberliegenden Wirkflächen umfassen, wobei das mindestens eine Kraftelement (6) bei einer Rastverbindung das Rastbolzenpaar (30, 31) an die Wirkflächen zwingt.

3. Rackvorrichtung nach Anspruch 1 oder 2, **dadurch gekennzeichnet, dass** an gegenüberliegenden Seitenflächen (33) des Rackschlittens (3) jeweils ein Rastbolzenpaar (30, 31) vorgesehen ist, wobei die Rastbolzen (30, 31) in Längsrichtung (L) beabstandet angeordnet sind.

4. Rackvorrichtung nach Anspruch 3, **dadurch gekennzeichnet, dass** an Seitenflächen des Racks (2) jeweils ein Rastnutenpaar (24) vorgesehen ist, in welche ein Rastbolzenpaar (30, 31) für eine Rastverbindung eingreift.

5. Rackvorrichtung nach einem der Ansprüche 1 bis 4, **dadurch gekennzeichnet, dass** in die Aufnahmen Einsätze (5) mit elastischen Federarmen (50) zum Halten der Probenträger (4a, 4b, 4c) eingesetzt sind.

6. Rackvorrichtung nach einem der Ansprüche 1 bis 5, **dadurch gekennzeichnet, dass** das Rack (2) aus einem bruchsicheren Kunststoff, insbesondere aus Polycarbonat, ausgebildet ist.

7. Rackvorrichtung nach Anspruch 6, **dadurch gekennzeichnet, dass** das Rack (2) aus einem Oberteil (20a) und einem fest damit verbundenen, insbesondere verschweißten oder verklebten, Unterteil (20b) zusammengesetzt ist.

8. Rackvorrichtung nach Anspruch 7, **dadurch gekennzeichnet, dass** das Unterteil (20b) und das Oberteil (20a) zueinander fluchtend angeordnete Aufnahmen (25, 26) für Probenträger (4a, 4b, 4c) aufweisen, wobei die Aufnahmen (25, 26) des Unterteils (20b) konisch verjüngend ausgebildet sind.

9. Rackvorrichtung nach einem der Ansprüche 1 bis 8, **dadurch gekennzeichnet, dass** der Rackschlitten (3) zumindest teilweise aus einem magnetischen und/oder magnetisierbaren Material ausgebildet ist.

10. Rackvorrichtung nach einem der Ansprüche 1 bis 9, **dadurch gekennzeichnet, dass** der Rackschlitten (3) an seiner Unterseite Kopplungselemente, insbesondere Positionierstifte (32), zur Kopplung mit dem Probenverteilsystem aufweist.

## Claims

1. A rack device for a sample distribution system, comprising a rack (2) having receivers for sample carriers (4a, 4b, 4c) and a rack carriage (3), wherein
- the rack carriage (3) and the rack (2) are tightly connectable with each other by means of a latching device releasable without use of tools,
- wherein the latching device includes latching elements (30, 31, 24) that are complementary to each other and mounted on the rack carriage (3) and the rack (2), and at least one force element (6) for applying a constraining force, wherein a latched connection is obtainable or releasable via a relative motion between the rack carriage (3) and the rack (2) opposite to the constraining force,
- wherein the latching elements comprise at least one pair of latching bolts (30, 31), comprising a rigid latching bolt (31) and a moveable latching bolt (30) arranged at a distance from the rigid latching bolt (31), and latching grooves (24), with the latching bolts (30, 31) being adapted to be introduced into the latching grooves, wherein a distance of the latching bolts (30, 31) is variable in opposition to the constraining force of the at least one force element (6).

2. The rack device according to claim 1, **characterized in that** the latching elements comprise at least one latching groove pair (24) complementary to the latching bolt pair (30, 31) and having at least two opposite effective surfaces, wherein the at least one force element (6) constrains the latching bolt pair (30, 31) on the effective surfaces in a latched connection.

3. The rack device according to claim 1 or 2, **characterized in that** on each of opposite side surfaces (33) of the rack carriage (3) a latching bolt pair (30, 31) is provided, wherein the latching bolts (30, 31) are arranged at a distance in a longitudinal direction (L).

4. The rack device according to claim 3, **characterized in that** on each of side surfaces of the rack (2) a latching groove pair (24) is provided in which a latching bolt pair (30, 31) engages for forming a latched connection.

5. The rack device according to any one of the claims 1 to 4, **characterized in that** inserts (5) having elastic spring arms (50) are inserted in the receivers for holding the sample carriers (4a, 4b, 4c).

6. The rack device according to any one of the claims 1 to 5, **characterized in that** the rack (2) is made of break-proof synthetic material, in particular is made of polycarbonate.

7. The rack device according to claim 6, **characterized in that** the rack (2) is composed of an upper part (20a) and a lower part (20b), the lower part being tightly connected to the upper part, in particular welded or adhesively bonded thereto.

8. The rack device according to claim 7, **characterized in that** the lower part (20b) and the upper part (20a) have receivers (25, 26) for sample carriers (4a, 4b, 4c) arranged to be aligned with one another, wherein the receivers (25, 26) of the lower part (20b) are configured in a conically tapered shape.

9. The rack device according to any one of the claims 1 to 8, **characterized in that** the rack carriage (3) is made at least partially of magnetic and/or magnetizable material.

10. The rack device according to any one of the claims 1 to 9, **characterized in that** the rack carriage (3) has coupling elements on its underside, in particular positioning pins (32), for coupling to the sample distribution system.

## Revendications

1. Dispositif de support pour une unité de distribution d'échantillons, comprenant un support (2) avec des logements pour des porte-échantillons (4a, 4b, 4c) et un chariot de support (3), dans lequel
- le chariot de support (3) et le support (2) peuvent être solidarisés l'un à l'autre au moyen d'un dispositif d'encliquetage séparable sans outil,
- dans lequel le dispositif d'encliquetage présente des éléments d'encliquetage complémentaires l'un à l'autre (30, 31, 24) disposés sur le chariot de support (3) et sur le support (2) et au moins un élément de force (6) pour appliquer une contrainte forcée, dans lequel une liaison par encliquetage peut être réalisée ou séparée par un mouvement relatif entre le chariot de support (3) et le support (2) contre la contrainte forcée,
- dans lequel les éléments d'encliquetage comprennent au moins une paire de boulons d'arrêt (30, 31), comprenant un boulon d'arrêt fixe (31) et un boulon d'arrêt mobile (30) espacé de celui-ci, et des rainures d'encliquetage (24), dans lesquelles les boulons d'arrêt (30, 31) peuvent être engagés, dans lequel une distance des boulons d'arrêt (30, 31) peut être modifiée contre la contrainte forcée dudit au moins un élément de force (6).

2. Dispositif de support selon la revendication 1, **caractérisé en ce que** les éléments d'encliquetage comprennent au moins une paire de rainures d'encliquetage (24) complémentaire à la paire de boulons d'arrêt (30, 31), avec au moins deux faces actives opposées l'une à l'autre, dans lequel ledit au moins un élément de force (6) pousse la paire de boulons d'arrêt (30, 31) sur les faces actives lors d'une liaison par encliquetage.

3. Dispositif de support selon la revendication 1 ou 2, **caractérisé en ce qu'**il est prévu respectivement une paire de boulons d'arrêt (30, 31) sur des faces latérales opposées (33) du chariot de support (3), dans lequel les boulons d'arrêt (30, 31) sont disposés à distance l'un de l'autre en direction longitudinale (L).

4. Dispositif de support selon la revendication 3, **caractérisé en ce qu'**il est prévu respectivement une paire de rainures d'encliquetage (24) sur des faces latérales du support (2), dans lesquelles une paire de boulons d'arrêt (30, 31) s'engage pour une liaison par encliquetage.

5. Dispositif de support selon l'une quelconque des revendications 1 à 4, **caractérisé en ce que** des éléments (5) avec des bras de ressort élastiques (50) sont insérés dans les logements pour maintenir les porte-échantillons (4a, 4b, 4c).

6. Dispositif de support selon l'une quelconque des revendications 1 à 5, **caractérisé en ce que** le support (2) est réalisé en une matière plastique incassable, en particulier en polycarbonate.

7. Dispositif de support selon la revendication 6, **caractérisé en ce que** le support (2) est composé d'une partie supérieure (20a) et d'une partie inférieure (20b) solidarisée, en particulier soudée ou collée, à celle-ci.

8. Dispositif de support selon la revendication 7, **caractérisé en ce que** la partie inférieure (20b) et la partie supérieure (20a) présentent des logements (25, 26) alignés les uns avec les autres pour des porte-échantillons (4a, 4b, 4c), dans lequel les logements (25, 26) de la partie inférieure (20b) sont de forme conique décroissante.

9. Dispositif de support selon l'une quelconque des revendications 1 à 8, **caractérisé en ce que** le chariot de support (3) est réalisé au moins partiellement en un matériau magnétique et/ou magnétisable.

10. Dispositif de support selon l'une quelconque des revendications 1 à 9, **caractérisé en ce que** le chariot de support (3) présente sur son côté inférieur des éléments de couplage, en particulier des goupilles de positionnement (32), pour le couplage à l'unité de distribution d'échantillons.
